# DEMANDE DE BREVET EUROPEEN

(11) **EP 4 411 322 A1**
(43) Date de publication de la demande: **07.08.2024**
(21) Numéro de dépôt: 24154682.9
(22) Date de dépôt: 30.01.2024
(51) Int. Cl.: G01D 5/244, G01D 3/032, G01D 3/02

(54) **PROCÉDÉ DE CORRECTION D'ERREURS DE MESURE D'UNE POSITION ANGULAIRE PAR UN CAPTEUR DE POSITION ANGULAIRE**

(30) Priorité: 31.01.2023 FR 2300866
(71) Demandeur: Codechamp, 23190 Champagnat (FR)
(72) Inventeur: GIBARD, Dominique, BELLEGARDE EN MARCHE (FR); TALVAT, Taras, MONTLUCON (FR); BOUYERON, Laurent, PANAZOL (FR)
(74) Mandataire: Dennemeyer & Associates S.A.

(57) **Abrégé**

[L'invention concerne un procédé de correction des erreurs de type bases et hautes fréquences générées par un capteur de position angulaire, caractérisé en ce qu'il comprend au moins les étapes suivantes :
une mesure d'une première position angulaire (θ1) connue, ladite mesure étant fournie par un capteur (C) de position angulaire d'un objet à l'aide d'un jeu d'au moins deux photo-détecteurs (P, P1) dont le nombre est un multiple de deux,
- b) effectuer une mesure d'au moins une seconde position angulaire (θ2) connue, ladite mesure étant fournie par le même capteur (C) qu'à l'étape a) à l'aide du même jeu de photo-détecteurs (P, P1) placés au même endroit qu'à l'étape a) et dont le nombre est un même multiple de deux qu'à l'étape a),
- c) obtenir, pour chacune des mesures des première (θ1) et seconde (θ2) positions angulaires obtenues aux étapes a) et b) une première (θ'1) et seconde (θ**'**2) position angulaire corrigée par une correction (E1, E2) des mesures de chaque position angulaire (θ1, θ2) par comparaison avec respectivement les valeurs des première et seconde positions angulaires connues et
- d) effectuer la moyenne (θ3) des première et seconde positions angulaires obtenues (θ'1, θ'2) après correction à l'étape c).

## Description

L'invention concerne un procédé de correction d'erreur de mesure d'une position angulaire par un capteur de position angulaire.

Ici, l'expression « capteur de position angulaire » désigne autant un capteur de position angulaire magnétique dit codeur magnétique qu'un capteur de position angulaire optique dit codeur optique. Ces différentes dénominations seront employées par la suite pour désigner des capteurs de position angulaire, magnétiques ou optiques.

Un capteur de position angulaire est un dispositif permettant, sans contact, de déterminer la position angulaire d'un objet. Il existe deux types de codeurs permettant de déterminer une position angulaire d'un objet: les codeurs optiques et les codeurs magnétiques. Dans un codeur optique, un disque comportant des zones opaques et des zones transparentes est entrainé en rotation par l'arbre de rotation du codeur. Un faisceau optique émis par des diodes infrarouges traverse les zones transparentes du disque en rotation et frappe des photo-détecteurs en créant un signal analogique qui est amplifié et transformé en signal numérique, ce dernier étant transmis à un moyen de traitement de données qui permet de fournir la position angulaire. Dans le cas d'un codeur magnétique un aimant permanent, au moins bipolaire, est fixé à un arbre de rotation et génère un champ magnétique. Ce champ magnétique varie en fonction du déplacement de l'aimant, donc selon la rotation de ce dernier. Le champ magnétique est détecté par un capteur configuré en disque qui permet d'obtenir deux courbes sinusoïdales déphasées de 90° et correspondant à un sinus et à un cosinus. Par calcul de l'arc tangent, on obtient la mesure d'un angle.

On note que dans les deux cas, on obtient une courbe fournissant la position de l'objet en fonction de l'angle. Une telle courbe est, en théorie, linéaire entre 0° et 360°. Il s'avère qu'en réalité cette courbe n'est pas une droite mais présente une double ondulation autour de la droite théorique. Une première ondulation d'une amplitude et d'une fréquence données à laquelle se superpose une seconde ondulation d'amplitude et de fréquence plus faibles. On obtient ainsi une courbe sinusoïdale irrégulière, d'aspect dentelée. La première ondulation correspond à une erreur dite à basses fréquences et la seconde à une erreur dite à hautes fréquences. Par la suite, les expressions « erreurs basses fréquences » et « erreurs hautes fréquences » seront également utilisées. Les erreurs à basses fréquences sont des erreurs dues à un défaut de centrage du disque optique ou de la piste magnétique. Il s'agit d'erreurs régulières et répétitives pour de mêmes conditions de montage d'un même codeur. Elles sont relativement fréquentes car une erreur faible peut induire un fort écart de mesure. Par exemple, un décentrage du disque d'un codeur optique de 10 µm, avec un diamètre de lecture de 35 mm, correspond à une erreur d'environ une minute d'angle, crête à crête. Ce type d'erreur varie si les conditions de montage du codeur varient. Il s'agit donc d'une erreur essentiellement d'origine mécanique.

Les erreurs à hautes fréquences sont le résultat d'autres types d'erreurs que l'on peut rencontrer. On peut citer à titre d'exemples non limitatifs une erreur de gravure du disque optique, une erreur sur la piste magnétique, une erreur sur le pas de gravure, une erreur sur le positionnement des photo-détecteurs, une erreur de déphasage des signaux sinus et cosinus pour un codeur magnétique. Du fait de ces deux types d'erreurs des solutions connues sont employées, notamment chez le fabricant, pour contrôler les codeurs, optiques ou magnétiques, avant leur commercialisation chez le client. Le fabricant dispose d'une courbe étalon pour un angle donné qui permet de corriger certaines erreurs, notamment celles à basses fréquences. Comme le signal numérique final correspond à un sinus et à un cosinus, on peut vérifier qu'il y a une erreur à hautes fréquences en vérifiant si on a ou non un déphasage et/ou une différence de formes des courbes pour deux angles différents et connus, entre les courbes sinus et cosinus. En réalignant les courbes entre les deux angles on corrige, ou du moins on limite, les erreurs à hautes fréquences. Si une telle solution est applicable et relativement satisfaisante lors du contrôle des codeurs de position angulaire chez le fabricant, il s'avère que chez l'utilisateur final les contraintes de montage des codeurs sont différentes. De ce fait, la correction d'erreurs peut être inefficace voire augmenter les erreurs car on génère une erreur supplémentaire sur les basses fréquences en induisant une opposition de phases une fois le codeur monté chez l'utilisateur. Il arrive ainsi que l'on amplifie jusqu'à la doubler l'erreur initiale. En d'autres termes, le fichier de corrections d'erreurs est figé et uniquement valable chez le fabricant mais déconnecté de la réalité une fois le codeur monté chez l'utilisateur et prêt à l'emploi. Une telle solution, bien que facile à mettre en oeuvre chez le fabricant, n'est pas satisfaisante car elle peut s'avérer totalement inefficace une fois le codeur en configuration d'utilisation. Il s'agit d'une solution dite d'étalonnage qui ne peut être reproduite telle quelle chez l'utilisateur.

Pour remédier à ce défaut, on connaît une autre solution, notamment pour les codeurs optiques, qui consiste à corriger les excentrements, donc les défauts majoritairement à l'origine des erreurs à basses fréquences, non pas avec des valeurs déterminées comme précédemment mais par un calcul. Lors de la mesure de deux angles différents on utilise deux photo-détecteurs placés en face l'un de l'autre, donc diamétralement opposés par rapport au disque. La phase relative des signaux issus des deux photo-détecteurs évolue de manière sinusoïdale sur un tour. On obtient alors pour chaque angle deux courbes en opposition de phase, les photo-détecteurs assurant des mesures d'angles à 180° l'une par rapport à l'autre. En faisant la moyenne des courbes, on obtient une valeur moyenne de l'angle, corrigée des erreurs à basses fréquences. Une fois cette correction faite, l'erreur à hautes fréquences est toujours présente. Si on effectue la différence entre l'angle issu de la moyenne et la valeur étalon pour corriger l'erreur à hautes fréquences, cela implique que les photo-détecteurs qui sont diamétralement opposés lisent exactement la même chose. Or, le décentrage du disque est toujours présent donc les deux photo-détecteurs ne lisent pas la même chose. De fait l'erreur à hautes fréquences est non seulement encore présente mais amplifiée. On connaît également par US-A-2021 278 260 un capteur comprenant une bobine émettrice conçue pour être alimentée par une source de courant hautes fréquences et au moins deux bobines réceptrices. L'une des bobines réceptrices génère un signal de type sinus et l'autre génère un signal de type cosinus lors de la rotation du coupleur. Un module compense les signaux de sortie non sinusoïdaux. Un autre module traite les signaux non sinusoïdaux provenant des bobines réceptrices, détermine une erreur dans ces signaux non sinusoïdaux, compense mathématiquement l'ensemble pour éliminer l'erreur et génère un signal de sortie représentatif de la position de rotation du coupleur. US-A-2020 240 811 décrit un filtre qui réduit le contenu hautes fréquences du signal de sortie et génère un signal de correction de décalage. US-A-2021/323603 concerne un dispositif de détection d'angle par un codeur comportant un correcteur d'angle. Il s'agit de multiplier par un facteur n un premier signal sinusoïdal afin d'avoir une valeur corrigée et de multiplier également par n un second signal d'angle, sinusoïdal aussi mais de phase différente. Le facteur n est un nombre réel différent de 1. En corrigeant le second signal multiplié par n sur la base du premier signal corrigé on obtient une valeur d'angle détectée. Les valeurs de n sont prédéfinies et non adaptées à l'écart entre les valeurs réelles et mesurées.

La plupart des solutions envisagées privilégient la correction d'un type d'erreurs, basses ou hautes fréquences, au détriment de l'autre type d'erreurs. Ainsi il existe un besoin en matière de correction d'erreurs des codeurs, optiques ou magnétiques, afin d'améliorer les performances de ceux-ci pour développer leurs utilisations dans de nombreux domaines d'application.

L'invention a pour objet de proposer un procédé permettant de corriger de manière optimale les deux types d'erreurs, sans favoriser la correction d'un type d'erreurs, basses ou hautes fréquences, par rapport à l'autre.

À cet effet l'invention concerne un procédé de correction des erreurs dites à basses et hautes fréquences générées par un capteur de position angulaire lors de la mesure d'une position angulaire, caractérisé en ce qu'il comprend au moins les étapes suivantes :
- a) effectuer une mesure d'une première position angulaire connue, ladite mesure étant fournie par un capteur de position angulaire d'un objet à l'aide d'un jeu d'au moins deux photo-détecteurs dont le nombre est un multiple de deux, les photo-détecteurs d'un même jeu de photo-détecteurs utilisés étant diamétralement opposés sur le capteur, deux par deux,
- b) effectuer une mesure d'au moins une seconde position angulaire connue, ladite mesure étant fournie par le même capteur qu'à l'étape a) à l'aide du même jeu de photo-détecteurs placés au même endroit qu'à l'étape a) et dont le nombre est un même multiple de deux qu'à l'étape a),
- c) associer à chaque mesure effectuée aux étapes a) et b) un fichier contenant les valeurs théoriques exactes de chaque position angulaire connue que doit mesurer chaque photo-détecteur,
- d) obtenir, pour chacune des mesures des première et seconde positions angulaires obtenues aux étapes a) et b) une première et seconde positions angulaires corrigées par une correction des mesures de chaque position angulaire, chaque correction étant effectuée en modifiant l'angle mesuré d'une valeur adaptée pour obtenir respectivement les valeurs des première et seconde positions angulaires connues définies à l'étape c) et
- d) effectuer la moyenne des première et seconde positions angulaires obtenues après correction à l'étape c).

Grâce à l'invention, sans modification structurelle d'un même capteur de position angulaire, avec un jeu d'au moins deux photo-détecteurs, on effectue deux mesures de deux positions angulaires distinctes et connues. Le capteur de position angulaire étant le même, les erreurs de mesure dites hautes fréquences qui sont dues à des erreurs de gravure, du pas de gravure, du positionnement des photo-détecteurs sont les mêmes, ce type d'erreurs étant lié à la structure même du capteur de position angulaire et des photo-détecteurs. L'étape b) permet ainsi de corriger, autant que possible, ce type d'erreurs de mesure. L'étape d) permet de corriger autant que possible les erreurs de mesure dites basses fréquences dues au décentrage du disque constitutif du capteur de position angulaire. Contrairement aux solutions connues, le fait de faire la moyenne des valeurs n'affecte pas les erreurs hautes fréquences car ici on utilise une valeur corrigée donnée et spécifique à chaque position angulaire. De la sorte, l'erreur hautes fréquences est identique, ou du moins similaire, pour les deux mesures de position angulaire.

Selon des aspects avantageux mais non obligatoires, un tel procédé peut comporter une ou plusieurs des étapes suivantes :

Si lors de l'étape b) on effectue plusieurs mesures de positions angulaires qui sont connues et différentes, le nombre de positions angulaires connues et différentes doit être pair.

L'invention sera mieux comprise et d'autres avantages de celle-ci apparaîtront plus clairement à la lecture de la description qui va suivre, donnée uniquement à titre d'exemple non limitatif et faite en référence aux dessins annexés dans lesquels:
[Fig.1] est une courbe théorique, sans erreur, des positions angulaires entre 0° et 360° lors de la rotation sur un tour et demi d'un capteur de position angulaire,
[Fig.2] est une courbe similaire à la figure 1, de positions angulaires réelles mesurées entre 0° et 360° lors de la rotation sur un tour d'un capteur de position angulaire,
[Fig.3] est une courbe illustrant les erreurs observées entre 0° et 360° par rapport à la valeur théorique, à partir des données de la figure 2,
[Fig.4] est une vue à plus grande échelle du détail IV à la figure 3 et
[Fig.5] est un schéma simplifié du procédé de correction d'erreurs selon un mode de réalisation de l'invention.

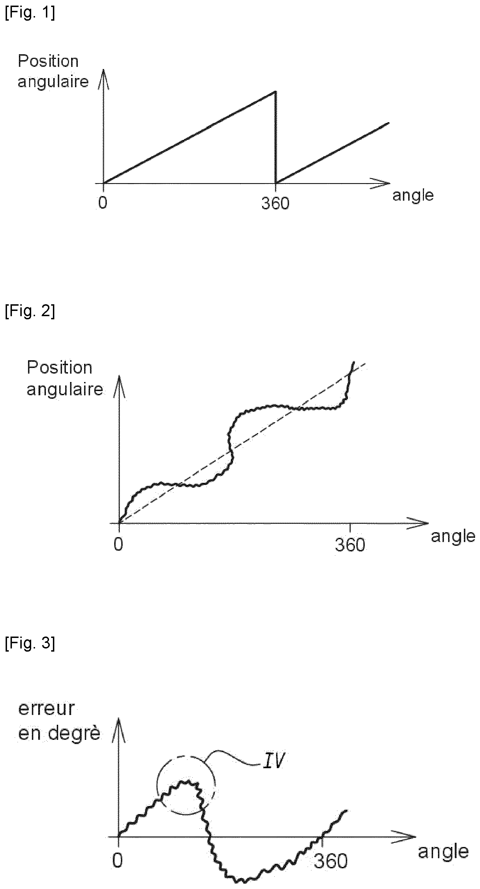

Par la suite, les termes capteur et codeur seront utilisés indifféremment pour désigner un capteur de position angulaire qu'il soit optique ou magnétique. La figure 1 est une courbe dite théorique c'est-à-dire représentant la position angulaire d'un objet en rotation en fonction d'un angle de rotation. Ainsi lors d'un tour complet de l'objet sur lui-même entre 0 degré et 360 degrés l'angle augmente ainsi que la position angulaire de l'objet. Une fois le tour complet effectué la position angulaire de l'objet revient à zéro et la courbe repart comme illustrée à la figure 1. Dans un tel cas théorique où il n'y a aucune erreur entre la position angulaire et l'angle cette courbe est linéaire. Il s'agit d'une droite avec une pente globalement à 45°, c'est-à-dire que la position angulaire de l'objet rotatif est directement dépendante de l'angle. Bien entendu dans la réalité il n'en est pas de même. En effet la rotation du capteur de position angulaire, en particulier du disque ou de la piste magnétique constitutifs du capteur, n'est pas forcément parfaite car il peut y avoir un décentrage du disque ou de la piste magnétique, selon que le capteur de position est de type optique ou magnétique. Il est rappelé ici qu'un décentrage du disque ou de la piste magnétique de 10 microns pour un diamètre de lecture de 35 mm correspond à environ une minute d'angle crête à crête soit 60 secondes d'arc dans le cas d'un capteur de position angulaire magnétique. L'excentrement du disque optique ou de la piste magnétique est une erreur régulière et répétitive de type mécanique pour autant que l'on ait les mêmes conditions de montage d'un même capteur de position angulaire.

D'autres types d'erreurs peuvent se greffer à cette erreur. Il s'agit des erreurs que l'on peut rencontrer sur la gravure du disque, sur des variations du pas de gravure, sur le positionnement des photo-détecteurs ou autre. Comme cela apparaît à la figure 2 de telles erreurs induisent un défaut de linéarité, c'est-à-dire génère une ondulation de la courbe par rapport à la droite théorique. Cette ondulation est majoritairement régulière puisque la principale erreur est une erreur répétitive qui est induite par un défaut de centrage du disque optique ou de la piste magnétique. A la figure 2 une telle ondulation de la courbe est à basses fréquences. D'autres erreurs, généralement de moindres amplitudes, irrégulières et variables, affectent également la mesure.

Ainsi lorsque l'on représente du point de vue numérique les erreurs en degrés par rapport à l'angle concerné, comme illustré à la figure 3, on obtient une courbe qui présente une double ondulation : la première ondulation est celle évoquée ci-dessus et concerne les erreurs dites basses fréquences. C'est l'ondulation qui a l'amplitude la plus importante. Des erreurs dites hautes fréquences avec des amplitudes plus faibles génèrent une seconde ondulation de la courbe. Si les erreurs basses fréquences restent le type d'erreurs le plus important il n'en demeure pas moins que les erreurs hautes fréquences sont présentes et viennent affecter la mesure, notamment lorsque l'on recherche une précision importante de l'ordre de la seconde d'angle. Comme indiqué dans le préambule, il existe des solutions connues pour corriger les erreurs répétitives à basses fréquences. Pour cela on compare, grâce à un fichier préétabli, les mesures de positions angulaires effectuées, avec le capteur magnétique ou optique, avec des données connues sur la position angulaire d'un objet étalon. La différence entre la position angulaire mesurée et celle théorique quantifie l'écart due au décentrage, donc la valeur de l'erreur ce qui permet de corriger le signal mesuré de sorte que le signal affiché fourni par le capteur tienne compte de l'erreur de décentrage et soit donc représentatif de la réalité. Une telle solution est satisfaisante en ce qui concerne la correction des erreurs à basses fréquences pour autant que les conditions de montage du capteur de position angulaire soient identiques et cela de manière permanente. Or cette correction est effectuée en usine par le fabricant et le codeur optique ou magnétique une fois monté chez le client n'a que rarement des conditions de montage identiques à celles rencontrées en usine. De ce fait non seulement l'erreur n'est pas corrigée mais elle est potentiellement amplifiée chez le client puisque la correction devient en elle-même une erreur qui s'ajoute à l'erreur initiale. La valeur erronée de la mesure de la position angulaire peut-être telle que dans certains cas on a observé un doublement de l'erreur entre l'usine et le client. De ce fait les fabricants ont tendance à effectuer, pour des codeurs intégrant leurs propres roulements, des corrections d'erreurs à basses fréquences à minima en usine pour qu'une fois le capteur monté chez le client on limite les erreurs à basses fréquences.

Les erreurs de l'autre type, dites erreurs à hautes fréquences, sont dues à des défauts autres que le décentrage et sont, certes, de moindres amplitudes mais sont variables et irrégulières, cela non seulement en amplitude mais également en fréquence. Pour mémoire, ce type d'erreur est dû, par exemple, à des défauts de gravure, du pas de gravure. Les solutions existantes sont relativement inefficaces pour corriger ce type d'erreur. En effet, même avec des solutions basées sur le calcul et en employant plusieurs photo-détecteurs ceux-ci ne détectent pas exactement la même chose puisque les erreurs à hautes fréquences ont des amplitudes et des fréquences variables ce qui fait qu'elles ne sont pas forcément identiques entre les mesures effectuées par les différents photo-détecteurs, selon la position de ceux-ci.

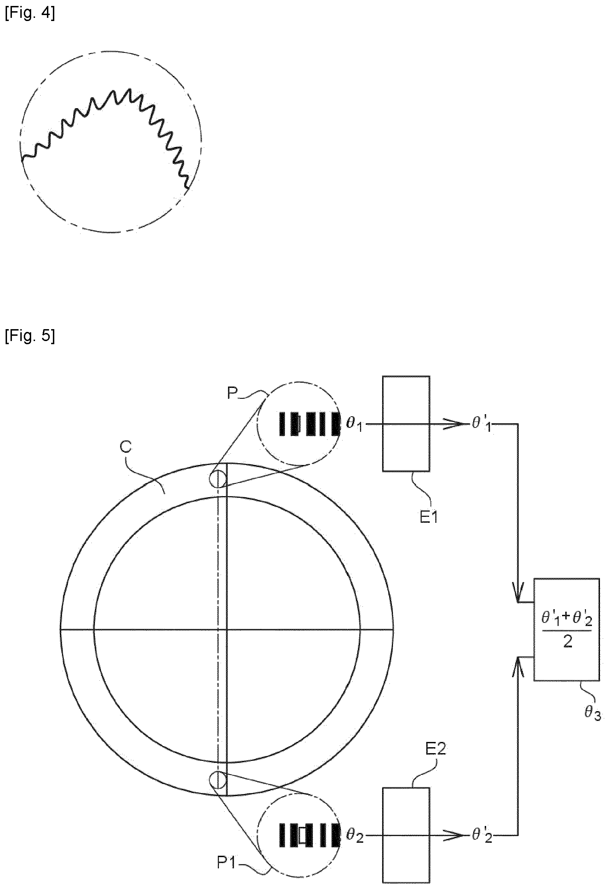

La solution proposée par l'invention permet de corriger, ou du moins de minimiser de manière simple non seulement les erreurs de mesure à basses fréquences mais également les erreurs de mesure à hautes fréquences. Pour cela, comme illustré à la figure 5, on utilise deux photo-détecteurs P, P1 qui sont placés de sorte à être diamétralement opposés au-dessus du disque ou de la piste magnétique circulaire, référencés par la lettre C, constitutifs du capteur de position angulaire. Les photo-détecteurs P, P1 vont effectuer chacun avec un décalage correspondant à un angle de 180° une mesure distincte d'une position angulaire donnée. L'expression « position angulaire » désigne ici la position angulaire de l'axe du capteur, donc l'axe théorique de la piste circulaire C. Selon l'invention, à chaque mesure effectuée par un photo-détecteur P ou P1 correspond une position angulaire qui est prédéfinie et d'une valeur connue. De la sorte on peut associer à chaque mesure effectuée par chacun des photo-détecteurs P, P1 un fichier contenant les valeurs théoriques exactes de la position angulaire connue et donnée que doit mesurer le photo-détecteur P ou P1. On associe à chaque mesure effectuée par, respectivement, le photo-détecteur P, P1 d'une position angulaire θ1 ou θ2 une valeur corrigée θ'1 ou θ'2 de chaque position angulaire donnée et connue. La correction est référencée E1, E2 pour respectivement les positions angulaires θ1, θ2 et est effectuée par association, c'est-à-dire en modifiant l'angle mesuré d'une valeur adaptée pour obtenir la valeur donnée et connue. De la sorte on corrige d'une part, de manière connue, l'erreur à basses fréquences sachant que cette erreur est égale en valeur absolue et opposée pour les deux mesures effectuées avec un décalage de 180° par les photo-détecteurs P, P1 et, d'autre part, on corrige également les erreurs à hautes fréquences. En effet, chaque photo-détecteur P, P1 ayant un fichier de contrôle donné, pour une position angulaire définie et connue, du fait que les photo-détecteurs P, P1 sont placés à 180° l'un par rapport à l'autre, ils sont donc positionnés de sorte à générer la mesure de deux valeurs d'angle détectées en opposition de phase. Avec une telle disposition, les erreurs basses fréquences détectées par chaque photo-détecteur P, P1 sont identiques et s'annulent car en opposition de phase, seules les erreurs hautes fréquences sont différentes et prises en compte et traitées individuellement lors de la correction de chaque valeur θ1 ou θ2 des positions angulaires mesurées par les photo-détecteurs P, P1. Il suffit, dans une autre étape, de faire la moyenne des positions angulaires corrigées selon la relation (θ'1 et θ'2)/2 pour obtenir une valeur θ3 corrigée de la position angulaire, autant en ce qui concerne les erreurs basses fréquences que hautes fréquences. Cette position angulaire θ3 obtenue par calcul est corrigée, d'un facteur donné, par rapport à la position angulaire donnée et connue puisque les erreurs dites hautes fréquences ont été prises en compte lors de chacune des mesures effectuées par chaque photo-détecteur P, P1.

Afin d'améliorer la prise en compte des erreurs hautes fréquences, donc de facto de réaliser une correction plus fine de ce type d'erreurs, il est possible d'utiliser un nombre de photo-détecteurs supérieur à deux, pour autant que ce nombre soit obligatoirement un multiple de deux et que les photo-détecteurs soient toujours diamétralement positionnés deux par deux sur le capteur. De plus, chaque photo-détecteur P, P1 doit être associé à une seule position angulaire donnée et connue afin de générer un fichier correctif par position angulaire prédéfinie. Dans un tel cas, la dernière étape effectue une moyenne entre toutes les valeurs corrigées de positions angulaires mesurées.

Une telle solution de correction des erreurs dites basses et hautes fréquences est indépendante des conditions de montage du capteur et donc peut s'appliquer sans difficulté chez le client lorsque ce dernier a effectué le montage du capteur.

Cette correction des erreurs dites basses et hautes fréquences s'effectue par calcul en usine, donc de manière masquée pour le client qui reçoit un capteur comportant déjà la correction de la position angulaire. Grâce à l'invention, les conditions de montage finales rencontrées chez le client n'ont pas ou peu d'effet sur les corrections d'erreurs effectuées en usine. Même si les erreurs basses et hautes fréquences ne sont pas complètement corrigées, elles sont ramenées à des valeurs acceptables par le client lors de l'utilisation du capteur. De plus une telle correction est effectuée uniquement par calcul, donc embarquée dans l'électronique du capteur ce qui fait qu'elle est présente et préétablie en usine, le client n'ayant aucune démarche à faire pour corriger son capteur et ne pouvant intervenir sur cette correction.

## Revendications

1. Procédé de correction des erreurs dites à basses et hautes fréquences générées par un capteur de position angulaire lors de la mesure d'une position angulaire, **caractérisé en ce qu'**il comprend au moins les étapes suivantes :
- a) effectuer une mesure (θ1) d'une première position angulaire connue, ladite mesure étant fournie par un capteur (C) de position angulaire d'un objet à l'aide d'un jeu d'au moins deux photo-détecteurs (P, P1) dont le nombre est un multiple de deux, les photo-détecteurs (P, P1) d'un même jeu de photo-détecteurs utilisés étant diamétralement opposés sur le capteur (C), deux par deux,
- b) effectuer une mesure (θ2) d'au moins une seconde position angulaire connue, ladite mesure étant fournie par le même capteur (C) qu'à l'étape a) à l'aide du même jeu de photo-détecteurs (P, P1) placés au même endroit qu'à l'étape a) et dont le nombre est un même multiple de deux qu'à l'étape a),
- c) associer à chaque mesure (θ1, θ2) effectuée aux étapes a) et b) un fichier contenant les valeurs théoriques exactes de chaque position angulaire (θ1, θ2) connue que doit mesurer chaque photo-détecteur (P, P1),
- d) obtenir, pour chacune des mesures (θ1, θ2) des première et seconde positions angulaires obtenues aux étapes a) et b) une première (θ'1) et seconde (8'2) positions angulaires corrigées par une correction (E1, E2) des mesures (θ1, θ2), de chaque position angulaire chaque correction (E1, E2) étant effectuée en modifiant l'angle mesuré (θ1, θ2) d'une valeur adaptée pour obtenir respectivement les valeurs des première et seconde positions angulaires connues définies à l'étape c) et
- e) effectuer la moyenne (θ3) des première et seconde positions angulaires obtenues (θ'1, θ'2) après correction à l'étape c).

2. Procédé selon la revendication 1, **caractérisé en ce que** si lors de l'étape b) on effectue plusieurs mesures de positions angulaires qui sont connues et différentes, le nombre de positions angulaires connues et différentes doit être pair.
